(19) Europäisches Patentamt
European Patent Office
Office européen des brevets

(11) **EP 4 194 936 A1**

(12) **EUROPEAN PATENT APPLICATION**

(43) Date of publication:
**14.06.2023 Bulletin 2023/24**

(21) Application number: **21306739.0**

(22) Date of filing: **10.12.2021**

(51) International Patent Classification (IPC):
**G02C 13/00** (2006.01)  **G01M 11/02** (2006.01)

(52) Cooperative Patent Classification (CPC):
**G01M 11/0221; G02C 13/005**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Essilor International
94220 Charenton-le-Pont (FR)**

(72) Inventors:
• **CALEFF, Florian
94140 ALFORTVILLE (FR)**
• **MURADORE, Fabien
94700 MAISONS-ALFORT (FR)**
• **NETTER, Estelle
75012 PARIS (FR)**

(74) Representative: **Ipsilon
Le Centralis
63, avenue du Général Leclerc
92340 Bourg-la-Reine (FR)**

(54) **A METHOD FOR ESTIMATING THE POSITION OF THE OPTICAL CENTER OF AN OPHTHALMIC LENS**

(57) This method for estimating a position of an optical center of an ophthalmic lens mounted on a frame, an image of the frame being obtained by an image capture device, comprises: detecting the position of the lens in a stream of the image capture device; obtaining a plurality of dimensional parameters, either of the frame, or of the lens; determining the estimated position of the optical center based on the detected lens position and either the plurality of frame dimensional parameters, or the plurality of lens dimensional parameters.

FIG.25

**Description**

FIELD OF THE DISCLOSURE

The present disclosure relates to a method for estimating the position of the optical center of an ophthalmic lens. The present disclosure also relates to a system for implementing such a method.

BACKGROUND OF THE DISCLOSURE

In order to be able to duplicate an ophthalmic lens, it is necessary to know the optical parameters defining the correction applied by the lens, and in particular the lens power.

Measuring the lens power of an ophthalmic lens is a complex operation usually performed by an eye care professional (also referred to as an ECP) thanks to a lensmeter.

Document WO 2021/140204 A1 discloses a method making it possible to automatically retrieve the optical power of an ophthalmic lens, in particular using a smartphone equipped with a camera and displaying predetermined patterns and a mirror.

However, in order to perform an accurate automatic measurement of the optical power, any user must perform this measurement at the optical center of the lens.

It is a technical challenge to be able to guide the user to position the smartphone in front of the mirror such that the pattern displayed by the smartphone is at the right position with respect to the measured lens. The objective is to keep the measurement process for the user very simple and seamless.

In particular, there is a need for estimating the position of the optical center of the lens.

SUMMARY OF THE DISCLOSURE

An object of the disclosure is to overcome the above-mentioned gaps of the prior art.

To that end, the disclosure provides a method for estimating a position of an optical center of an ophthalmic lens mounted on a frame, an image of the frame being obtained by an image capture device, wherein the method comprises:

detecting the position of the lens in a stream of the image capture device;
obtaining a plurality of dimensional parameters, either of the frame, or of the lens;
determining the estimated position of the optical center based on the detected lens position and either the plurality of frame dimensional parameters, or the plurality of lens dimensional parameters.

Thus, the only contribution of the consumer or low-skilled ECP is to use an image capture device, which is much easier to do than using a lens meter.

In the method according to the disclosure, the steps of detecting the position of the lens, obtaining a plurality of dimensional parameters and determining the estimated position of the optical center of the lens may be done semi-automatically, so that the usability and the accuracy/reproducibility are much higher.

Thus, the method according to the disclosure may be used for example for manufacturing a duplicate of an ophthalmic lens in a very simple and convenient manner for the consumer, without the need to spend time in an optician's shop.

In an embodiment, the method comprises obtaining a plurality of dimensional parameters of the frame and further comprises obtaining an estimated pupillary distance, determining the estimated position of the optical center being based on the detected lens position, the plurality of frame dimensional parameters and the estimated pupillary distance.

In that embodiment, the estimated pupillary distance is either an exact value, measured on a wearer of the ophthalmic lens, or an approximate value, obtained from a statistical model.

In an embodiment, detecting the lens position comprises using a neural network.

In an embodiment, detecting the lens position comprises using an image processing algorithm.

In an embodiment, the plurality of lens dimensional parameters comprises at least one of a dimension corresponding to a lens width and a dimension corresponding to a lens height.

In that embodiment, the method further comprises extracting the lens width and the lens height from a bounding box that is the smallest rectangle containing the lens.

In that embodiment and where detecting the lens position comprises using a neural network, the neural network may provide the bounding box in real time.

In an embodiment, the plurality of frame dimensional parameters comprises at least a dimension corresponding to a frame bridge width.

In that embodiment, the method further comprises obtaining the frame bridge width as a statistical estimate based on a collection of frames.

In an embodiment, obtaining the plurality of dimensional parameters, either of the frame, or of the lens, comprises using a neural network, or an image processing algorithm, or a database using a reference code on an arm of the frame, or a statistical model.

To the same end as mentioned above, the present disclosure also provides a system for implementing a method for estimating a position of an optical center of an ophthalmic lens mounted on a frame, an image of the frame being obtained by an image capture device, wherein the method comprises:

> detecting the position of the lens in a stream of the image capture device;
> obtaining a plurality of dimensional parameters, either of the frame, or of the lens;
> determining the estimated position of the optical center based on the detected lens position and either the plurality of frame dimensional parameters, or the plurality of lens dimensional parameters,
> wherein the system comprises:
>
>> at least one processor;
>> a mobile device equipped with the image capture device.

In an embodiment, the mobile device is a smartphone and the image capture device is a smartphone camera.

To the same end as mentioned above, the present disclosure further provides a computer program product comprising one or more sequences of instructions that are accessible to a processor and that, when executed by the processor, cause the processor to implement a method for estimating a position of an optical center of an ophthalmic lens mounted on a frame, an image of the frame being obtained by an image capture device, wherein the method comprises:

> detecting the position of the lens in a stream of the image capture device;
> obtaining a plurality of dimensional parameters, either of the frame, or of the lens;
> determining the estimated position of the optical center based on the detected lens position and either the plurality of frame dimensional parameters, or the plurality of lens dimensional parameters.

To the same end as mentioned above, the present disclosure further provides a non-transitory information storage medium, storing one or more sequences of instructions that are accessible to a processor and that, when executed by the processor, cause the processor to implement a method for estimating a position of an optical center of an ophthalmic lens mounted on a frame, an image of the frame being obtained by an image capture device, wherein the method comprises:

> detecting the position of the lens in a stream of the image capture device;
> obtaining a plurality of dimensional parameters, either of the frame, or of the lens;
> determining the estimated position of the optical center based on the detected lens position and either the plurality of frame dimensional parameters, or the plurality of lens dimensional parameters.

As the advantages of the system, of the computer program product and of the information storage medium are similar to those of the method, they are not repeated here.

The system, the computer program product and the information storage medium are advantageously configured for executing the method in any of its execution modes.

BRIEF DESCRIPTION OF THE DRAWINGS

For a more complete understanding of the description provided herein and the advantages thereof, reference is now made to the brief descriptions below, taken in connection with the accompanying drawings and detailed description, wherein like reference numerals represent like parts.

> FIG. 1 is a flowchart showing steps of a method for retrieving at least one optical parameter of an ophthalmic lens disclosed in document WO 2021/140204 A1.
> FIG. 2 is a schematic view of an ophthalmic lens, an image capture device, patterns and a reflection device used in a method for retrieving at least one optical parameter of an ophthalmic lens disclosed in document WO 2021/140204 A1.

FIG. 3 is a schematic view of a reflection device used in the method disclosed in document WO 2021/140204 A1 and shows a coordinate system of the reflection device.

FIG. 4 is a schematic view illustrating a function involved in calculations comprised in the method disclosed in document WO 2021/140204 A1.

FIG. 5 is a schematic view illustrating another function involved in calculations comprised in the method disclosed in document WO 2021/140204 A1.

FIG. 6 shows an example of a pattern that may be used in the method disclosed in document WO 2021/140204 A1.

FIGS. 7, 8, 9, 10, 11 and 12 show processing steps performed on the pattern example of Figure 6 according to the method disclosed in document WO 2021/140204 A1.

FIGS. 13 and 14 illustrate steps of the method disclosed in document WO 2021/140204 A1 in case the lens is mounted on an eyeglasses frame.

FIG. 15 shows examples of patterns that may be used in the method disclosed in document WO 2021/140204 A1.

FIG. 16 shows other examples of patterns that may be used in the method disclosed in document WO 2021/140204 A1.

FIG. 17 is a schematic view illustrating other examples disclosed in document WO 2021/140204 A1, involving a smartphone and a computer.

FIG. 18 illustrates the pitch, roll and yaw axes of a smartphone used in the method disclosed in document WO 2021/140204 A1.

FIG. 19 illustrates a part of a smartphone screen used for smartphone positioning in the method disclosed in document WO 2021/140204 A1.

FIG. 20 illustrates a non-limiting example of a distance positioning pattern used for distance positioning of a smartphone in the method disclosed in document WO 2021/140204 A1.

FIG. 21 illustrates a non-limiting example of a template used for distance positioning of a smartphone in the method disclosed in document WO 2021/140204 A1.

FIG. 22 illustrates a non-limiting example of three different levels of brightness of the template of Figure 21, involved in a smartphone screen brightness adapting process, in the method disclosed in document WO 2021/140204 A1.

FIG. 23 illustrates a non-limiting example of user guidance for eyeglasses frame detection in the method disclosed in document WO 2021/140204 A1.

FIG. 24 is a graph illustrating lens power calculation in the method disclosed in document WO 2021/140204 A1.

FIG. 25 is a flow diagram showing steps of a method according to the present disclosure, in a particular embodiment.

DETAILED DESCRIPTION OF THE DISCLOSURE

In the description which follows, although making and using various embodiments are discussed in detail below, it should be appreciated that as described herein are provided many inventive concepts that may embodied in a wide variety of contexts. Embodiments discussed herein are merely representative and do not limit the scope of the disclosure. It will also be obvious to one skilled in the art that all the technical features that are defined relative to a process can be transposed, individually or in combination, to a device and conversely, all the technical features relative to a device can be transposed, individually or in combination, to a process and the technical features of the different embodiments may be exchanged or combined with the features of other embodiments.

The terms "comprise" (and any grammatical variation thereof, such as "comprises" and "comprising"), "have" (and any grammatical variation thereof, such as "has" and "having"), "contain" (and any grammatical variation thereof, such as "contains" and "containing"), and "include" (and any grammatical variation thereof such as "includes" and "including") are open-ended linking verbs. They are used to specify the presence of stated features, integers, steps or components or groups thereof, but do not preclude the presence or addition of one or more other features, integers, steps or components or groups thereof. As a result, a method, or a step in a method, that "comprises", "has", "contains", or "includes" one or more steps or elements possesses those one or more steps or elements, but is not limited to possessing only those one or more steps or elements.

An ophthalmic lens according to the present disclosure may be a spectacle lens, a contact lens, an instrument lens or any other kind of lens used in ophthalmology or optics. For instance, it may be a corrective lens having a power of the sphere, cylinder, axis, addition and/or prism type. The lens power can be defined as the inverse of the focal distance of the lens. The lens may be a single vision lens having a constant power, or it may be a progressive lens having variable power, or it may be a bi-focal or a tri-focal lens.

If the lens is a single vision lens, the power of the lens is the power at the optical center of the lens, i.e. the point of the lens where light is not deviated when it goes through the lens.

If the lens is a progressive lens, the focal distance varies all along the lens, including far vision, intermediate vision and near vision areas. The power of the progressive lens comprises the power at a far vision point, the power at a near vision point and the power distribution in the lens.

If the lens is a bi-focal (respectively tri-focal) lens, the focal distance varies between the two (respectively three) different areas of the lens. The power of the bi-focal or tri-focal lens comprises the power in each of those areas.

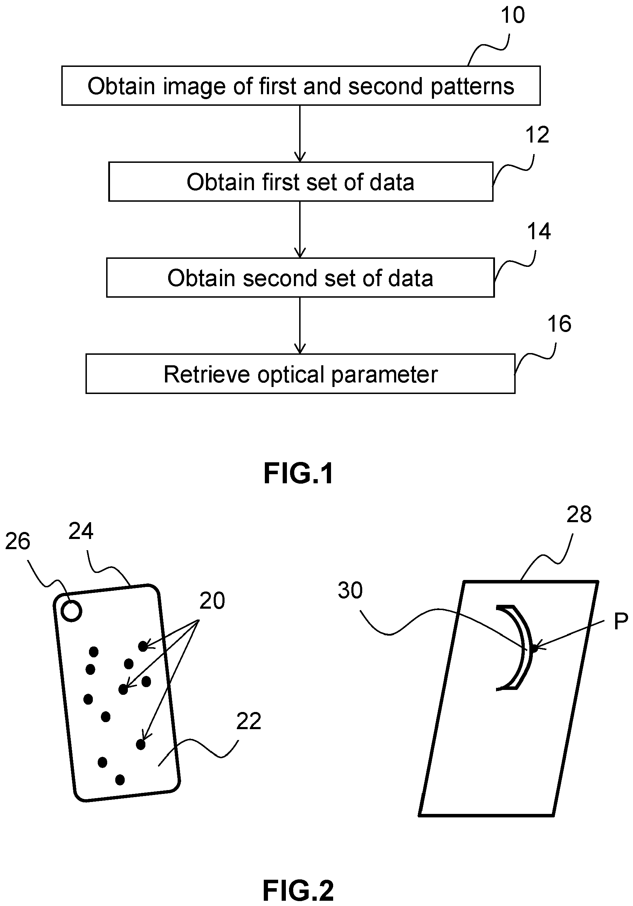

As shown in Figure 1, a method for retrieving at least one optical parameter of an ophthalmic lens as disclosed in document WO 2021/140204 A1 comprises a first step 10 of obtaining an image of a first and second patterns by using an image capture device located at a first position.

By way of non-limiting example, the at least one optical parameter may be the optical center or any of the optical parameters defining the power of the lens, i.e. any of the optical parameters contained in the prescription of the lens, namely, sphere and/or cylinder and/or axis and/or addition and/or prism.

Using an image capture device and a source pattern comprising a first and a second patterns, the general principle of the method disclosed in document WO 2021/140204 A1 consists in getting to know the source pattern and the deformation of the source pattern seen through the lens and analyzing the data relating to the source pattern and its deformation to retrieve the at least one optical parameter of the lens.

The implementation of that principle involves at least one processor, which may be comprised in a fixed and/or mobile device, such as in a fixed or portable computer and/or in a smartphone and/or in the cloud.

The implementation also involves a fixed or mobile device equipped with the above-mentioned image capture device.

The mobile device may be a smartphone.

The image capture device may be comprised in the smartphone i.e. the smartphone may be equipped with a camera. As a variant, the image capture device may be a separated image capture device.

In addition to the at least one processor, the mobile device and the image capture device, various combinations or configurations of elements are possible, provided at least one of the elements is able to show or display or reflect patterns and at least one of the elements is able to capture images.

The mobile device may be combined either with a reflection device, such as a mirror, or with a non-portable or fixed or portable computer. It is to be noted that, in the present disclosure, the "portable computer" may be a laptop, or a tablet, or any other type of portable computer.

As to the source pattern, it may be a two-dimension (2D) or three-dimension (3D) source pattern, available as an object, or printed on a piece of paper, or displayed on a screen.

The source pattern may be a 3D gauge the dimensions of which are known, or a credit card, or a target printed on A4 paper, or a target the size of which is known in pixels, displayed on the screen of a computer, smartphone or tablet.

By way of non-limiting example, the image capture device may be a 2D camera or a 3D scanner, with or without other sensors embedded into it, such as a telemeter and/or a gyroscope: it may be a 2D camera of a smartphone or tablet, or a combination of a high definition 2D camera with a 3D sensor, such as for example one or more TOF (Time Of Flight) sensors (i.e. sensors emitting light towards the source pattern which then reflects it, the distance between the source pattern and the TOF sensor being deduced from the light travelling time) or structured-light sensors (i.e. sensors projecting fringes or other known patterns towards the source pattern the deformation of which is analyzed by the sensor). The image capture device may or may not comprise additional hardware, such as a holder.

The image capture device is located at a first position and captures an image of the first and second patterns.

Namely, the method disclosed in document WO 2021/140204 A1 is based on the use of the source pattern, a part of which is seen by the image capture device through the lens (the first part) and another part of which is seen directly by the image capture device (the second part).

During the following steps 12 and 14, from the image of the first and second patterns obtained at step 10, a first set of data is obtained from the first pattern seen through the lens by the image capture device (step 12) and a second set of data is obtained from the second pattern seen outside the lens by the image capture device (step 14). Step 12 may be carried out before or after or at the same time as step 14.

Then, during step 16, by using the first and second data and taking into account, in a manner detailed hereafter, relative positions, i.e. positions with respect to each other, of the image capture device, the lens and the first and second patterns, the at least one optical parameter is retrieved, in a manner also detailed below.

Relative positions of the image capture device, the lens and the first and second patterns, i.e. positions, with respect to each other, of the image capture device, the lens and the first and second patterns, may be obtained partially or totally by using the second set of data.

A rough estimate and a refined estimate of the at least one optical parameter may be obtained, namely:

- a rough estimate of the at least one parameter may be obtained by using the first set of data and relative positions of the image capture device, the lens and the first and second patterns, i.e. positions, with respect to each other, of the image capture device, the lens and the first and second patterns; and
- a refined estimate of the at least one optical parameter may be obtained by:
- using the first set of data and relative positions of the image capture device, the lens and the first and second patterns, i.e. positions, with respect to each other, of the image capture device, the lens and the first and second patterns; and

- applying an optimization technique based on minimizing a cost function as described later in more detail, a value of the cost function being determined by using ray tracing.

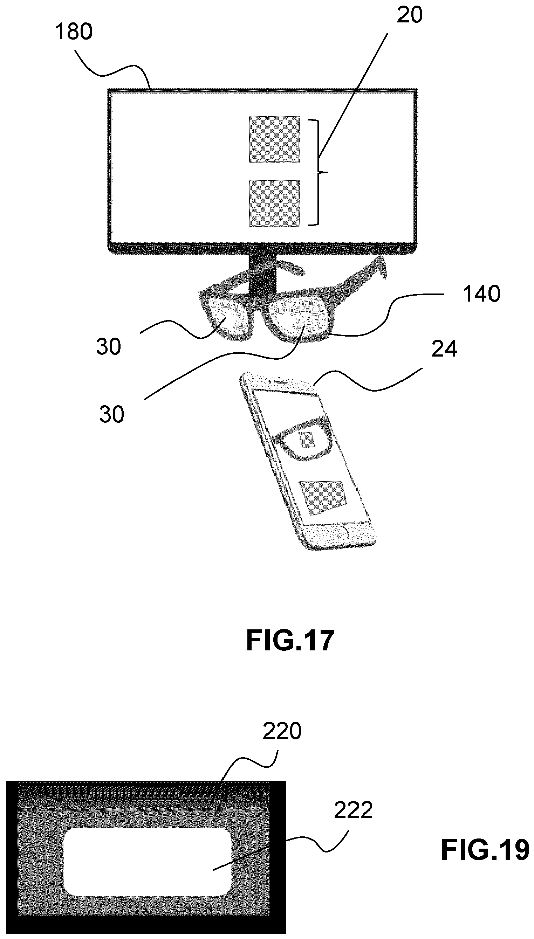

As shown in Figure 17, the lens 30 is mounted on a frame 140. The method may further comprise detecting a position, i.e. location and orientation, of the frame and deducing therefrom the cylinder axis of the lens in the coordinate system of the frame, rather than in the image capture device coordinate system.

There are several ways of detecting the frame.

The detection of the frame may comprise obtaining a model of a frame from a database where a plurality of kinds of frames have been stored and defined.

As a variant, the process of detecting the frame may comprise obtaining information on the frame, and then finding the frame in the image of the first and second patterns.

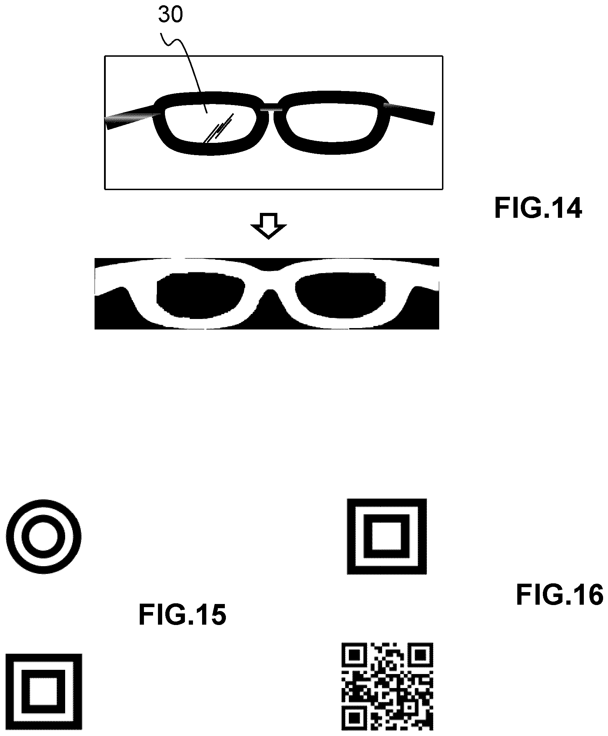

For example, the process of detecting the frame may comprise obtaining information on the frame by using the image capture device 26 located at a second position for taking a picture of the frame. To that end, the frame may be put on a plane surface such as a table, with the at least one lens in contact with the plane surface. In that case, the detection of the frame will also comprise obtaining a model from the image of the frame taken as described with reference to Figure 14.

If the source pattern (i.e. the first and second patterns 20) is not known (because for example the source pattern is not displayed on the screen of the smartphone), a picture of the first and second patterns 20 in front of the reflection device 28 (shown in Figure 2) may be taken with the image capture device 26 located at a third position, in order to obtain an image of the first and second patterns 20, so that the source pattern will be known in the coordinate system of the image capture device 26.

A picture of the first and second patterns together with a reference object (e.g. a credit card) might be captured.

As a variant, a picture of the first and second patterns might be captured with a camera with known focal length and pixel size, in addition with camera pattern distance information provided by a sensor (e.g. telemeter).

As another variant, a picture of the first and second patterns might be captured with a 3D camera.

If the source pattern is already known in pixels and the resolution and dimensions of the smartphone 24 are known, the source pattern is already known in the coordinate system of the image capture device 26, so that it is not necessary to take a picture of the source pattern with the image capture device 26 located at the first position or at the third position.

The obtaining of (i) the first and second sets of data, (ii) relative positions of the image capture device, the lens and the first and second patterns and (iii) the rough and refined estimates of the at least one optical parameter, will be described below in detail in a particular embodiment of the method, in which, in step 10, (a) the obtaining the image of the first pattern comprises reflecting, by a reflection device, the first pattern before it is seen by the image capture device through the lens and (b) the obtaining the image of the second pattern comprises reflecting, by the reflection device, the second pattern before it is seen by the image capture device outside the lens. Namely, it may be assumed that the step of seeing by the image capture device is carried out after the step of reflecting by the reflection device.

As shown in Figure 2, the first and second patterns 20 are part of a 2D pattern which is for example displayed on the screen 22 of a smartphone 24. By way of non-limiting example, the image capture device 26 is the front camera of the smartphone.

The patterns 20 can be seen by the image capture device 26 thanks to a reflection device 28 which, by way of non-limiting example, is a mirror. The lens 30 (or a frame, if any, on which the lens 30 is mounted) is located between the image capture device 26 and the reflection device 28 so that the front surface of the lens 30 is tangent to the reflection device 28 at a contacting point P. The first and second patterns 20 and the image capture device 26 are oriented towards the lens 30.

For stability, the mirror may be put on a wall, in a vertical position, or on a table, in a horizontal position.

The above-mentioned general principle may be implemented as follows:

- the frame may be known i.e. "frame learning" may be implemented by obtaining an image of the frame, with the image capture device 26 taking a picture of the frame for example with the back camera of the smartphone 24, if the smartphone 24 is equipped therewith, the frame being put for example on a table;
- the deformation of the source pattern seen by the image capture device 26 through the lens 30 may be known by obtaining an image of the source pattern, with the image capture device 26 taking a picture of the frame while a user is holding the frame in contact with the reflection device 28; and
- if the source pattern is unknown, it may be known by obtaining an image of the source pattern with the image capture device 26 taking a picture of the source pattern displayed on the screen 22 of the smartphone 24 and seen by the image capture device 26 via the reflection device 28.

The coordinate system of the source pattern is constrained to the coordinate system of the camera of the smartphone 24, as they are physically bound to one another. The coordinate system of the frame is partially known, because the frame is held in contact with the reflection device 28.

Obtaining the first set of data, the second set of data and retrieving the at least one optical parameter implies calculations, which may be done through an algorithm fully embedded in the smartphone or running in a remote computer, or via an application (API) available on the cloud, or with a combination of elements embedded in the smartphone and elements available in a remote computer and/or on the cloud. Such a combination makes it possible to optimize the volume of data transferred and the computation time needed.

The above-mentioned calculations are detailed below in the configuration of Figure 2.

The calculations may be done in two parts.

The first part of the calculations is based on the points of the source pattern outside the lens 30. It is related to the second set of data mentioned previously.

In brief, in the first part of the calculations, the points outside the lens are used for determining the relative positions (including orientation and location) between the mirror and the camera i.e. the positions of the mirror and camera with respect to each other, by using ray tracing and running an optimization algorithm.

The first part of the calculations is described below in more detail.

In the following, a coordinate system R is a system uniquely determining the position of points or other geometric elements in an Euclidean space, by assigning a set of coordinates to each point. The set of coordinates used below is (x, y, z), referring to three axes X, Y, Z that are orthogonal to each other. $Q_{object,R}$ is an object point expressed in the coordinate system R.

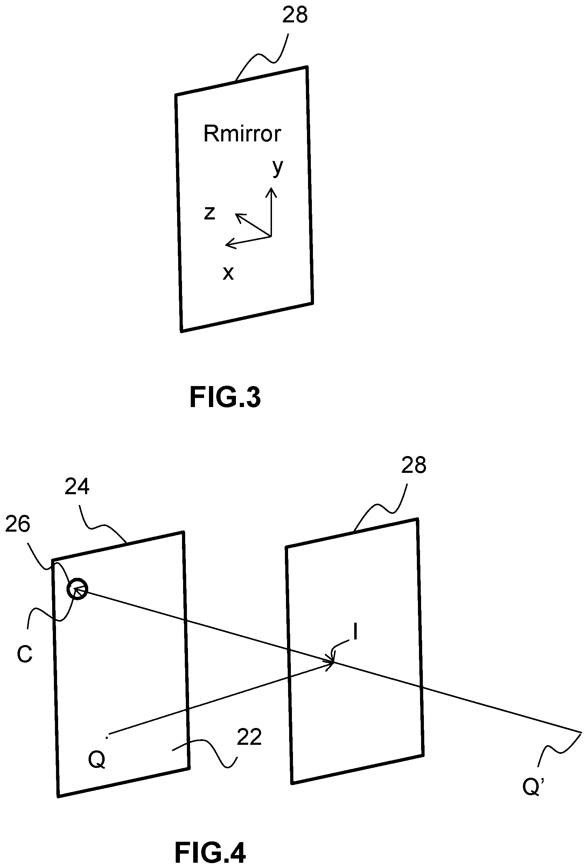

Figure 3 shows the mirror and the coordinate system Rmirror of the mirror.

As the front surface of the lens 30 is tangent to the mirror, it is assumed that the coordinate system Rlens of the lens 30 is the same as the coordinate system Rmirror of the mirror: Rlens = Rmirror. The coordinate system of the smartphone 24 (also referred to as the "device") is denoted Rdevice and the coordinate system of the image capture device 26 (also referred to as the "camera") is denoted Rcamera. Since the source pattern (displayed on the screen of the device) and the image capture device 26 are physically on the same device, which is the smartphone 24, the transformation between Rdevice and Rcamera is known.

The transformation between Rmirror and Rdevice is calculated. This fully determines the transformation between Rcamera and Rlens:

$$R_{camera->lens} = R_{camera->device} * R_{device->mirror} * R_{mirror->lens},$$

where $R_{mirror->lens}$ is the identity.

It is assumed that the physical dimensions of the screen 22 are known, so that the same notation is used for the object points which may be obtained in pixel units and for referring to the corresponding 3D points in Rdevice.

Images of the $Q_{object}$ points are invariant with respect to rotations around the Z axis of the mirror and translations along the X and Y axes of the mirror. Therefore, only rotations around the X and Y axes of the mirror and translations along the Z axis of the mirror can be retrieved using the reflected points of the source pattern.

Let us define the following change of coordinate system from the device to the mirror, denoted Kdevice->mirror:

$$K_{device->mirror}(\theta_x,\theta_y,t_z) = \{P_{Rdevice->}P_{Rmirror} = \rho_y(\theta_y)\rho_x(\theta_x)P_{Rdevice} + T_z(t_z)\},$$

where:

$\theta_x$, $\theta_y$ and $t_z$ are the parameters of the change of coordinate system from the device to the mirror,
$P_{Rdevice}$ is a 3D point expressed in the coordinate system of the device,
$P_{Rmirror}$ is a 3D point expressed in the coordinate system of the mirror,
$\rho_y$, $\rho_x$ and $T_z$ are respectively rotation matrices around the Y and X axes and a translation vector along the Z axis.

The function Reflect: (QRmirror, $C_{Rmirror}$) -> ZRmirror, calculates the image of an object point $Q_{Rmirror}$ on the mirror, seen by the camera point $C_{Rmirror}$, after being reflected on the mirror. The result $Z_{Rmirror}$, as well as the object point $Q_{Rmirror}$ and the camera point $C_{Rmirror}$, are expressed in the coordinate system Rmirror of the mirror.

This is illustrated by Figure 4, where C is a pinhole of the camera, Q is a point of the source pattern displayed on the screen 22, Q' is the image point of Q via the mirror, I is the intersection between the mirror plane and the ray connecting Q' and C. The point I is outside the lens. The mirror plane and the camera plane are not necessarily parallel.

Let us define $Z_{Rcamera}(Q_{Rdevice},\theta_x,\theta_y,t_z)$ as the image point of the object point Q expressed in the coordinate system Rdevice of the device, as seen by the camera after reflection on the mirror. The rotation and translation parameters show the dependence of the image on the orientation of the device with respect to the mirror. The result $Z_{Rcamera}$ is expressed in the coordinate system Rcamera of the camera. The following formula makes explicit how the $Z_{Rcamera}$ image point is calculated:

$$Z_{Rcamera}(Q_{Rdevice}, \theta_x, \theta_y, t_z) = (K_{camera->device} \; o \; K_{device->mirror})^{-1} \; o$$

$$Reflect(K_{device->mirror}Q_{Rdevice}, K_{device->mirror}C_{Rdevice})$$

where the sign "o" is the operator performing a composition of functions. In other words, the following operations are made:

- transpose the object point $Q_{Rdevice}$ and the camera point $C_{Rdevice}$ in the coordinate system Rmirror of the mirror, using the $K_{device->mirror}$ function;
- use the Reflect function to calculate the image point in the coordinate system Rmirror of the mirror;
- transpose the image in the coordinate system of the camera, which requires a function Kmirror->camera;

as the functions Kcamera->device and Kdevice->mirror are known, the function Kmirror->camera can be retrieved by composing them and then using the inverse function:

$$K_{mirror->camera} = (K_{mirror->device} \; o \; K_{device->camera}) = (K_{camera->device} \; o \; K_{device->mirror})^{-1}$$

The 3D image point $Z_{Rcamera}$ can then be projected onto the 2D camera plane, in pixel units, using an appropriate camera model. A well-known pinhole camera model that factors in radial and tangential distortions may be used. Projection of a 3D image point on to the camera plane may use some camera parameters such as intrinsic parameters $f_x$, $f_y$, $c_x$, $c_y$ and distortion parameters (see below). Such parameters may be obtained in many different manners, such as camera calibration, as detailed below.

The camera model is defined as follows for an object point (x,y,z) expressed in the coordinate system Rcamera of the camera:

$$\begin{cases} x' = \dfrac{x}{z} \\ y' = \dfrac{y}{z} \\ r = \sqrt{x'^2 + y'^2} \\ x'' = x'(1 + k_1 r^2 + k_2 r^4 + k_3 r^6) + 2p_1 x'y' + p_2\left(r^2 + 2x'^2\right) \\ y'' = y'(1 + k_1 r^2 + k_2 r^4 + k_3 r^6) + 2p_2 x'y' + p_1\left(r^2 + 2y'^2\right) \\ Project(x, y, z) = (u, v) = (f_x x'' + c_x, f_y y'' + c_y) \end{cases}$$

$f_x$ and $f_y$ are the focal lengths of the camera, in pixel units;
assuming that (Ox, Oy, Oz) is the coordinate system of the camera, $c_x$ and $c_y$ are the coordinates in pixels in the sensor coordinate system of the principal point, which is the intersection of the Oz axis with the image plane; in the above-mentioned pinhole model, Oz is the axis orthogonal to the camera sensor;
$k_1$, $k_2$ and $k_3$ are radial distortion coefficients;
$p_1$ and $p_2$ are tangential distortion coefficients;
"Project" is a function that projects onto the camera sensor the 3D object point (x,y,z) expressed in the camera coordinate system. The result is a 2D object point in pixel units.

This model requires that the camera be accurately calibrated, so that $f_x$, $f_y$, $c_x$, $c_y$, $k_1$, $k_2$ and $k_3$ are known precisely.

However, a camera model different from the one described above (either more complex, or simpler) may be used, depending on the degree of precision necessary for a particular use of the method.

The orientation of the device with respect to the mirror can then be estimated by minimizing the following cost function J$_{orientation}$:

$$J_{orientation}(\theta_x, \theta_y, t_z) = \frac{1}{2} \left\| \begin{array}{c} Project\left(Z_{Rcamera}(Q^1_{object,Rdevice}, \theta_x, \theta_y, t_z)\right) - Q^1_{image} \\ ... \\ Project\left(Z_{Rcamera}(Q^m_{object,Rdevice}, \theta_x, \theta_y, t_z)\right) - Q^m_{image} \end{array} \right\|^2$$

where m is an integer higher than or equal to 1.

$$\left(\theta_x^*, \theta_y^*, t_z^*\right) = argmin_{(\theta_x, \theta_y, t_z)} J_{orientation}(\theta_x, \theta_y, t_z)$$

The above equation can be solved by using any non-linear least-squares algorithm, such as the Gauss-Newton or the Levenberg-Marquardt algorithm.

In brief, ray-tracing and optimization enable to know the relative positions of the mirror, frame and lens in the camera coordinate system, that is to say the positions of the mirror, frame and lens with respect to each other in the camera coordinate system.

The second part of the calculations is based on the points of the source pattern seen by the image capture device 26 through the lens 30.

In brief, in the second part of the calculations, the points inside the lens and the relative positions (including orientation and distance) between mirror and camera which were determined in the first part of the calculations are used, by running an optimization algorithm and using ray tracing, for:

determining an initial lens, which may be a planar lens or a random spherical lens, or which may be an estimated geometry based on a rough estimation of lens magnification; and
optimizing the initial lens to solve a least squares problem, including minimizing a cost function that is calculated by using ray tracing on points of the first pattern, where the position of the points on the first pattern is known and their image is obtained by ray tracing and compared to the points on the first pattern.

The second part of the calculations is described below in more detail.

In order to estimate the power of the lens 30, the observed magnification may be used for calculating the linear magnification, as follows:

$$Power = \frac{LinearMagnification - 1}{LinearMagnification \cdot t_z^*}$$

where $t_z^*$ is the distance from the device to the mirror (which is approximately the same as the distance from the device to the lens 30), obtained previously.

In order to obtain the linear magnification, the area magnification is first calculated, by forming the convex hull of the refracted and reflected object points, denoted respectively $\overline{P_{object}}$ and $\overline{Q_{object}}$. The corresponding image points are denoted respectively $\overline{P_{image}}$ and $Q_{image}$.

$$AreaMagnification = \frac{Area\left(\overline{Q_{object}}\right)}{Area\left(\overline{P_{object}}\right)} \cdot \frac{Area\left(\overline{P_{image}}\right)}{Area\left(\overline{Q_{image}}\right)}$$

The linear magnification is taken as the square root of the area magnification, which then gives an estimate of the power of the lens 30.

This is a rough estimate, because it does not account for astigmatism and the paraxial approximation is implied in the lens power formula, which means that the rays are assumed to make a small angle with respect to the optical axis and enter the lens close to the optical center.

In the following steps, an estimated physical lens is calculated, which will serve as a starting point for the optimization algorithm.

Using the estimated power, the most likely lens material is selected. A non-limiting example of classification regarding the refractive index (hereafter "Index") of the material is given below:

If $0 \leq$ |Power| < 2, Index = 1.50
If $2 \leq$ |Power| < 4, Index = 1.60
If $4 \leq$ |Power| < 6, Index = 1.67
If $6 \leq$ |Power|, Index = 1.74

Using the estimated power and the lens material, a spherical front surface $S_{front}$ is chosen, based on a compromise between esthetics and optical performance. This process is called base curve selection and is specific to each lens manufacturer. However, it is considered that the selected front surface will not vary greatly between manufacturers for a given prescription and a given material.

In that step, a center thickness for the lens is selected as well and is denoted e.

Then, a rear spherical surface is calculated in order to match the estimated power. This may be done by using a thin lens model:

$$S_{front} = \frac{Index - 1}{FrontRadius}$$

$$RearRadius = -\frac{S_{Front} \cdot FrontRadius}{Power - S_{Front}}$$

where Index is the refractive index and FrontRadius and RearRadius are respectively the radii of the spherical front and rear surfaces.

A ray-tracing based least-squares optimization is performed in order to find a physical lens (hereafter "OptimalLens") that yields the same image $P_{image}$ of the $P_{object}$ set of points as the one observed, i.e. Image(OptimalLens,$P_{object}$) = $P_{image}$.

As mentioned previously, the lens front surface is assumed to be tangent to the mirror at the contact point.

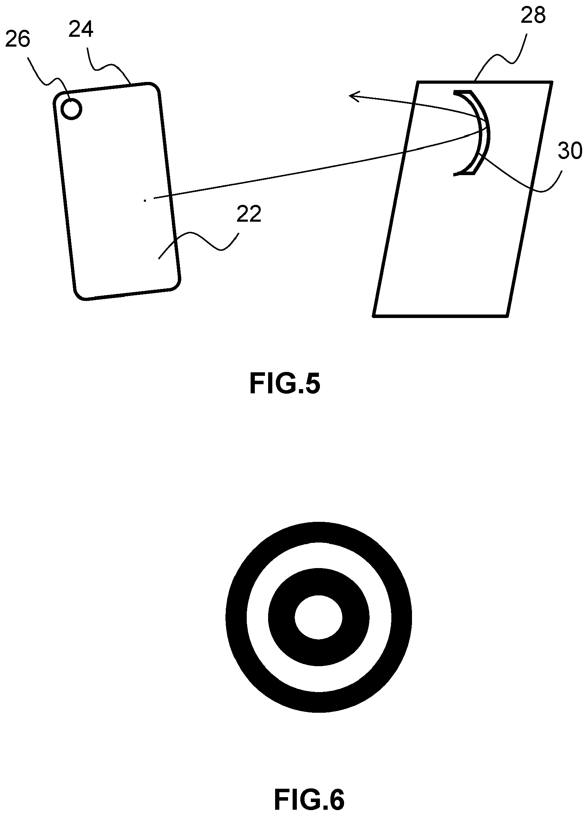

For an object point $P_{object,Rmirror}$, let us define the function Propagate($P_{object,Rmirror}$,$C_{Rmirror}$,Lens) -> $W_{Rmirror}$, which calculates the image of the object point $P_{object,Rmirror}$ seen by the camera point $C_{Rmirror}$, after being refracted by the lens 30 and reflected on the mirror, then refracted by the lens 30 once more, as shown in Figure 5. The result $W_{Rmirror}$ is expressed in the coordinate system Rmirror of the mirror. Such a ray is calculated using a simple Newton scheme. The image point $W_{Rmirror}$ is then the intersection of the exit ray with the lens rear surface.

At this point, the orientation and distance of the device (i.e. the smartphone 24) with respect to the mirror are known, thanks to the first part of the calculation described previously.

Using the same notation as before for the transformation from the coordinate system Rdevice of the device to the coordinate system Rmirror of the mirror, we have $K_{device \to mirror}(t_x,t_y) = K_{device \to mirror}(\theta_x{}^*,\theta_y{}^*,t_z{}^*) + T_x(t_x) + T_y(t_y)$.

The previously estimated physical lens is used as a starting lens, which can then be optimized.

Namely, a toroidal rear surface will replace the spherical rear surface of the previously estimated physical lens, with both torus radii equal to the sphere radius at the beginning of the optimization process. The torus radii of the lens rear surface are denoted $r_1$ and $r_2$ and the torus axis of the lens rear surface is denoted a.

Given an object point $P_{object,Rdevice}$ expressed in the coordinate system Rdevice of the device, $W_{Rcamera}$ is its image point seen through the lens 30, expressed in the coordinate system Rcamera of the camera:

$$W_{Rcamera}(P_{object,Rdevice},t_x,t_y,r_1,r_2,a) = (K_{camera \to device} \; o \; K_{device \to mirror})^{-1} \; o$$

$$Propagate(K_{device \to mirror}P_{object,Rdevice},K_{device \to mirror}C_{Rdevice},lens)$$

The translation parameters $t_x$ and $t_y$, which were left undetermined in the previous steps, intervene here in the device to mirror coordinate system transformation. The radii and axis parameters intervene in the lens definition.

Last, the cost function defining the least-squares problem, which has to be minimized in order to reconstruct a lens that yields the same image as the one observed, is defined as follows:

$$J_{lens}(t_x, t_y, r_1, r_2, a)$$

$$= \frac{1}{2} \left\| \begin{matrix} Project\left(W_{Rcamera}\left(P^1_{object,Rdevice}, t_x, t_y, r_1, r_2, a\right)\right) - P^1_{image} \\ \dots \\ Project\left(W_{Rcamera}\left(P^n_{object,Rdevice}, t_x, t_y, r_1, r_2, a\right)\right) - P^n_{image} \end{matrix} \right\|^2$$

where n is an integer higher than or equal to 1.

$$\left(t^*_x, t^*_y, r^*_1, r^*_2, a^*\right) = argmin_{(t_x, t_y, r_1, r_2, a)} J_{lens}(t_x, t_y, r_1, r_2, a)$$

OptimalLens = Lens(r1*,r2*,a*)

The above optimization procedure may be applied to other configurations, as long as the changes of coordinate system between the camera, the source pattern and the lens are known. Of course, if no reflection device is involved and rays coming from the source pattern directly reach the camera, the propagation function would need to be adapted, by removing the reflection.

The optimal lens is calculated using the back vertex power formula in both torus meridians $S_{rear,1}$ and $S_{rear,2}$ of the lens rear surface:

$$S_{rear,1} = -\frac{Index - 1}{r^*_1}$$

$$S_{rear,2} = -\frac{Index - 1}{r^*_2}$$

Both meridians powers $P_1$ and $P_2$ are then obtained as follows:

$$P_1 = S_{rear,1} + \frac{S_{front}}{1 - \dfrac{S_{front} \cdot e}{Index}}$$

$$P_2 = S_{rear,2} + \frac{S_{front}}{1 - \dfrac{S_{front} \cdot e}{Index}}$$

where e is the center thickness.

It is assumed that $P_1 < P_2$ (if this is not the case, those values are switched).

The cylinder value is $P_2 - P_1$ in the positive cylinder convention.

The prescription axis is the torus axis a*, corrected using the rotation parameter $\theta_z$, which is the angle between the X axis in the coordinate system Rcamera of the camera and the X axis in the coordinate system Rmirror of the mirror and which is obtained using the frame detected in the picture.

In brief, the method disclosed in document WO 2021/140204 A1:

- takes into account the relative positions of the mirror, frame and lens calculated in the first part of the calculations;
- calculates the lens in the coordinate system Rcamera of the camera, firstly as a rough estimation based on magnification and secondly, as a refined estimation based on ray-tracing and optimization; and
- corrects the orientation of the cylinder axis.

At the end of such calculations, the power of the lens in the coordinate system Rframe of the frame is obtained.

It should be noted that it is not necessary to detect the frame for separating points that are within the lens and points that are outside the lens. Nevertheless, as frame detecting may be used for determining the cylinder axis of the lens if the lens is a single vision lens, frame detecting may also be used in that particular embodiment for securing separation of points within and outside the lens.

As described above, the method disclosed in document WO 2021/140204 A1 is based on the use of a source pattern, a part of which is seen directly by the image capture device and another part of which is seen by the image capture device through the lens. Identification of the source pattern is detailed below.

A feature matching algorithm may be run in order to group object points on a known source pattern with the corresponding image points on the picture taken by the image capture device. The frame contour may be used as a mask to separate points seen through the lens (Pobject, Pimage) from those that are only seen on the mirror (Qobject, Qimage).

Therefore, two sets of matching points are obtained.

$$\{P_{object} = (P^1_{object}, \cdots, P^n_{object}), P_{image} = (P^1_{image}, \cdots, P^n_{image})\}$$

$$\{Q_{object} = (Q^1_{object}, \cdots, Q^m_{object}), Q_{image} = (Q^1_{image}, \cdots, Q^m_{image})\}$$

where n and m are integers higher than or equal to 1.

As an example, the first and second patterns 20 may comprise concentric black rings and white rings, as shown in Figure 6.

Such a source pattern may be used for both the lower and the upper parts of the screen 22, i.e. both for the first pattern and the second pattern. As another example, it may be used only for the upper part of the screen 22 and a QR-code may be used for the lower part of the screen 22.

Using an image processing algorithm, the four circles of that source pattern (two black circles and two white circles) may be extracted and each circle may be discretized into a predefined number of points.

On the picture taken by the image capture device 26, representing the deformed pattern, an ellipse is fit on each circle.

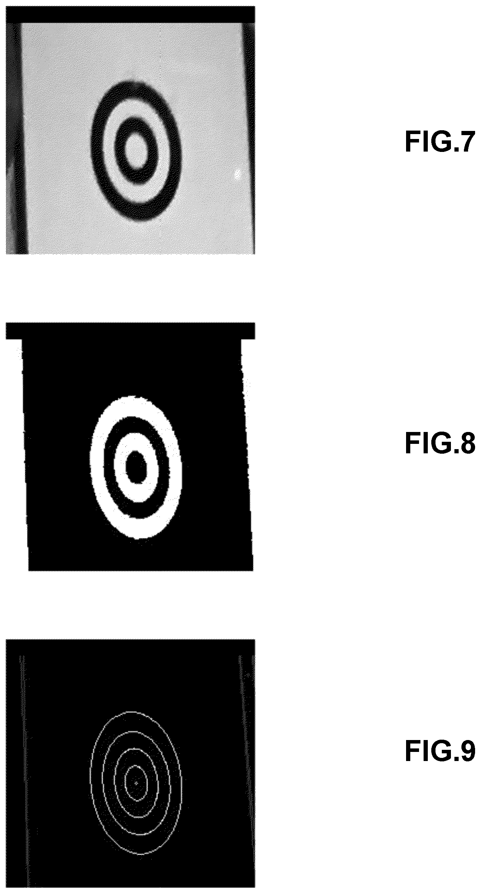

In order to find the ellipses, a Region Of Interest (ROI) may be set on the picture to restrain the research area. The picture may be converted from RGB to grayscale (as shown in Figure 7), then to binary (as shown in Figure 8) using a filtering method, in order to obtain the ellipses (as shown in white in Figure 9).

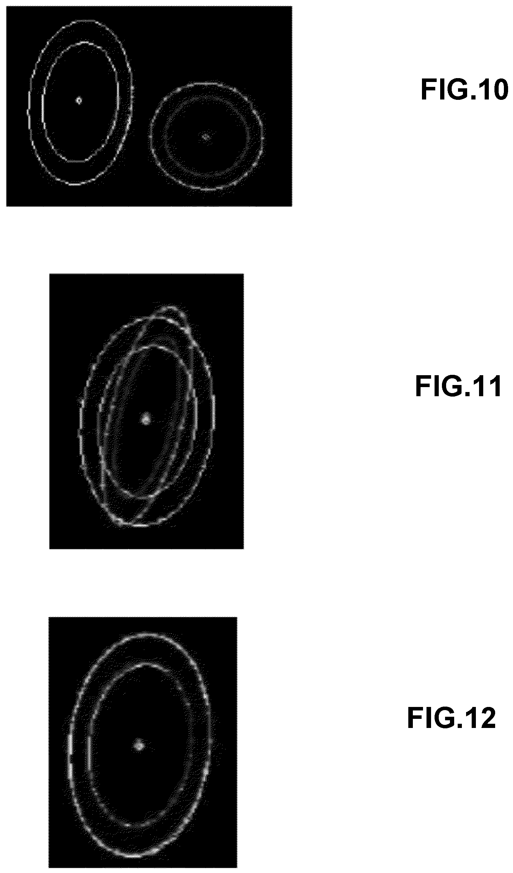

Then, the projection of each discretized point is computed from the object circles with ray tracing through the simulated lens on the 2D plane of the ellipses, so as to obtain so-called projected points. An algorithm is then used in order to find the position of the closest point, on the corresponding ellipse, of each projected point (as shown in Figure 10).

Advantageously, only the two largest ellipses (shown on the left of Figure 10) are used. As Figure 10 shows the beginning of the optimization, the projected points are a circle (shown on the right of Figure 10). The dots on the largest ellipse are the closest to each of the dots on the largest circle and the dots on the smallest ellipse are the closest to each of the dots on the smallest circle.

The gap in each dimension (x and y) between each point and its closest point on the ellipse is used for the optimization. The gap in each dimension between the center of each ellipse and the centroid of the corresponding projected points is also used, for example with a weight equal to the number of projected points. This makes it possible for the centroid of the projected points to converge at the same position as the center of the ellipses, as shown in Figure 11, which is the third iteration (in a total of twenty-one iterations) of the optimization process.

Figure 12 shows the last iteration, where projected points match the ellipses, so that the optimization stops and the simulated lens is used for the calculation of the lens power.

Figures 15 and 16 show other examples of patterns, which may be used for retrieving optical parameters such as the power and optical center of the lens. The pattern in Figure 15 has two concentric circles at the top and two concentric squares at the bottom and the pattern in Figure 16 has two concentric squares at the top and a QR code at the bottom. Nevertheless, various combinations of tops and bottoms of such patterns may be used.

In any of the above-mentioned pattern configurations:

- at least a part (or portion) of the pattern (or the second pattern if there are two patterns) that is outside the lens, which is the part of the pattern (or the second pattern if there are two patterns) that is seen directly (i.e. not through the lens) by the camera, is used for determining the relative positions (including orientation and distance) between mirror and camera, i.e. the positions of the mirror and camera with respect to each other; and
- at least a part (or portion) of the pattern (or the first pattern if there are two patterns) that is within the lens, which is the part of the pattern (or the first pattern if there are two patterns) that is seen through the lens by the camera, is used for retrieving the lens power.

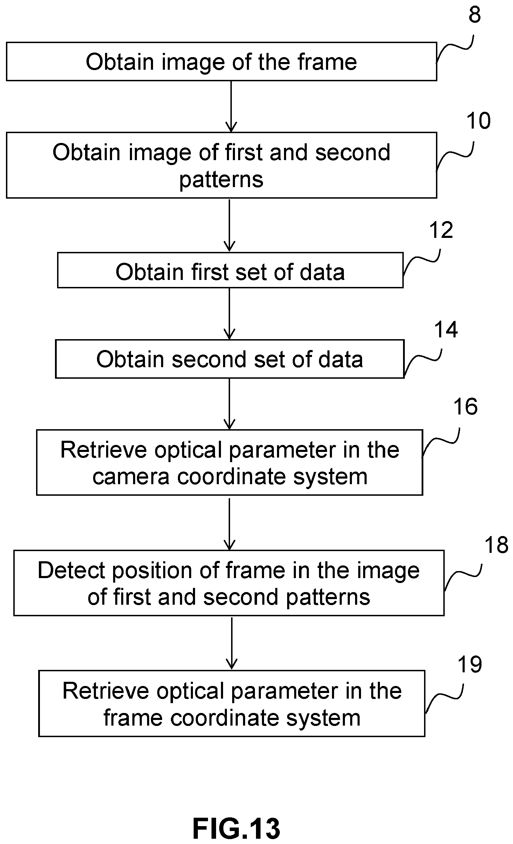

As shown in Figure 13, where the lens is mounted on an eyeglasses frame, a method disclosed in document WO 2021/140204 A1, for retrieving at least one optical parameter of an ophthalmic lens, comprises:

- a first step 8 of obtaining an image of the frame;
- steps 10, 12, 14 as described with reference to Figure 1;
- step 16 as described in Figure 1 and in which the at least one optical parameter is retrieved in the camera coordinate system;
- a step 18 of detecting the position of the frame in the image of the first and second patterns; and
- a step 19 of retrieving the at least lone optical parameter in the frame coordinate system.

Figure 14 shows an example of the result of step 8 of obtaining an image of the frame. The top portion of the drawing shows an example of a pair of eyeglasses comprising a frame and at least one ophthalmic lens 30 and to which the method of Figure 13 may be applied and the bottom portion of the drawing shows the obtained image of the frame.
In the "frame-learning" stage, for facilitating for a user the operation of obtaining an image of the frame, the image capturing may be guided e.g. by displaying centering and/or aligning marks on the screen 22 of the smartphone 24, so that the positioning of the frame on a table with preferably homogeneous background be optimal (e.g. frame visible on the full width of the picture, centered and aligned with the horizontal axis). The above-mentioned marks may be red at the beginning and become green when predefined conditions are respected.
If the smartphone 24 is equipped as usual with a gyroscope, such gyroscope may be used for alerting the user if the smartphone 24 is not positioned correctly (e.g. horizontal/parallel to the table).
The color of the background may then be detected by means of a histogram analysis of the colors. The background may then be extracted by a flood fill (also known as seed fill) algorithm. Then, the image of the frame may be binarized and morphology operators which are known per se may be applied to extract the part of the image corresponding to the frame and its mask, i.e. its contour. Any residual rotation of the image may be corrected by techniques known per se.
Using the information on the frame (also referred to as a "model" of the frame) obtained in the "frame learning" stage, the spectacle frame contour can be detected in the picture taken with the help of the reflection device 28 during the frame detection stage: the scaling factor to apply to the model may be calculated based on the distance from the smartphone 24 to the frame. The lens to search (left or right) is known. The useful part of the frame may be extracted and the photo may be enlarged on the edges. A certain number of orientations of the model of the frame may be tested in order to find the best position of the frame by studying, for each angle, the correlation between the frame visible in the image of first and second patterns 20 and the model obtained during the "frame learning" stage. If the frame is detected, the best position (location and orientation) of the frame in the image is selected. The technique described above is also valid when the frame is partially visible in the image of the first and second patterns 20.
The schematic view of Figure 17 encompasses various embodiments of the method and system according to the present disclosure. In those various embodiments, in addition to at least one processor and an image capture device, the system according to the disclosure comprises a smartphone 24 and a computer 180.
As will be seen below from the detailed description of those various embodiments, the computer 180 may be used for displaying the first and second patterns 20, while the smartphone 24 may be used for capturing images. In other words, in such a configuration, two electronic devices are involved.
On the other hand, in previously described examples of the method disclosed in document WO 2021/140204 A1 not involving any computer, but only the smartphone 24 and the reflection device 28, the smartphone 24 may be used both for displaying the first and second patterns 20 and for capturing images. In other words, in such a configuration, only one electronic device is involved. In addition, in such a configuration, the position of the frame 140 may be at least partially known by simply positioning the frame 140 in contact with the reflection device 28. Thus, the obtaining of relative positions of the reflection device 28, the frame 140 if any, and the image capture device 26 (i.e. positions of the reflection device 28, the frame 140 and the image capture device 26 with respect to each other) becomes simplified.
Therefore, the configuration combining the use of the smartphone 24 and the reflection device 28 is a simplified configuration in comparison with the configuration combining the use of the smartphone 24 and the computer 180.
According to one of those examples, the implementation of the method disclosed in document WO 2021/140204 A1 comprises:

- displaying the first and second patterns 20 on the screen of the computer 180 or printing them on a piece of paper,
- using an image capture device such as a back camera of the smartphone 24,
- holding at least one lens 30 and/or the frame 140 between the first and second patterns 20 and the smartphone 24 so that the first pattern is seen through the lens and the second pattern is seen directly (i.e. outside the lens) by the image capture device.

For facilitating use of the system disclosed in document WO 2021/140204 A1 by any user without wearing his/her eyeglasses, automatic assistance to the user, also referred to as "user guidance" in the present disclosure, may be provided, as described previously in relationship with the "frame learning" stage.

Positioning the smartphone 24 may comprise following steps:

- step 1: orientation of the smartphone 24,
- step 2: distance positioning of the smartphone 24,
- step 3: adaptation of the brightness of the smartphone screen.

In addition, eyeglasses positioning may comprise following steps:

- step 4: frame detection,
- step 5: automatic photo capture.

Smartphone positioning and eyeglasses positioning steps are detailed below.

Step 1: orientation of the smartphone 24

For smartphone positioning, the user opens and runs an application available in the smartphone 24 while holding the smartphone 24 in front of a mirror with the smartphone screen facing the mirror.

Advantageously, the smartphone 24 has a predetermined tilt angle with respect to the mirror. This simplifies the user experience, as described below.

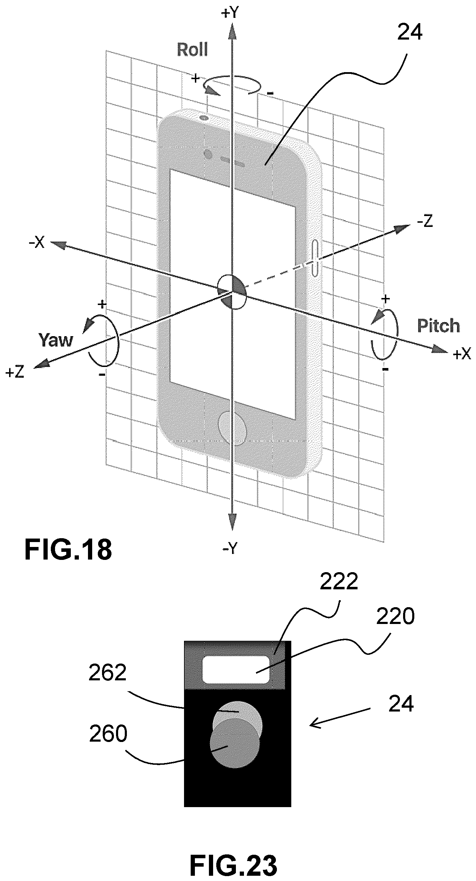

The smartphone gravitometer, which computes the earth's gravitational attraction on the three axes X, Y, Z, respectively pitch, roll and yaw axes of the smartphone 24 as shown in Figure 18, may be used to that end.

Having a tilt angle amounts for the smartphone 24 to have a predetermined part of the earth's gravitational attraction on the yaw axis Z and the rest of the attraction on the roll axis. Thus, the smartphone 24 is oriented with respect to the mirror in such a manner that the upper part of the smartphone 24 is closer to the mirror than the lower part of the smartphone 24. In other words, the smartphone is tilted forward.

In this embodiment, as shown in Figure 19, a first fixed object 220, which, by way of non-limiting example, may have a first predetermined color, is displayed on the top part of the smartphone screen.

By way of non-limiting example, the first fixed object 220 may be a colored geometric shape, e.g. a blue rectangle.

In addition, a first moving object 222 of a second predetermined color different from the first color and having a size lower than or equal to the size of the first fixed object 220, is also displayed on the smartphone screen.

By way of non-limiting example, the first moving object 222 may be a geometric shape identical to the shape of the first fixed object 220, e.g. the first moving object 222 may be a white rectangle.

The first moving object 222 is moving according to the tilting of the smartphone 24. Having the first moving object 222 displayed inside the first fixed object 220, as shown in Figure 19, means that the smartphone 24 is tilted forward.

As a variant, both first objects 220 and 222 could be moving with respect to each other, although this may be less ergonomic for the user.

Step 2: distance positioning of the smartphone 24

For distance positioning, i.e. for ensuring that the smartphone 24 is at the right distance from the mirror, one or several distance positioning patterns 230 may be displayed at the bottom of the smartphone screen. If several distance positioning patterns 230 are displayed, e.g. two distance positioning patterns 230, they may be identical to each other.

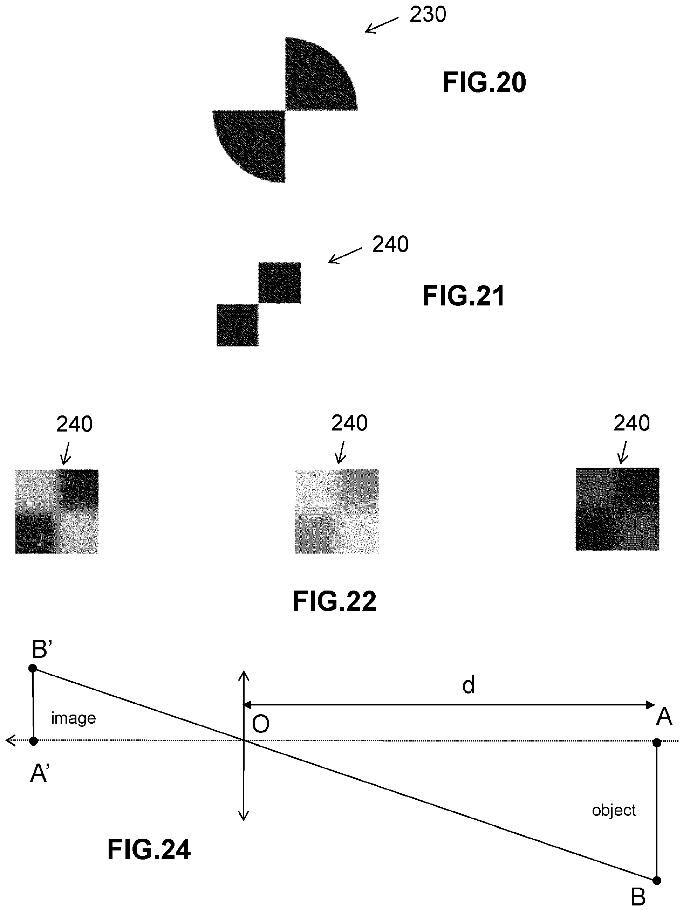

Figure 20 shows an example of a distance positioning pattern 230. Any of the distance positioning patterns 230 is detected for example by template matching, i.e. by determining whether the distance positioning pattern 230 matches with a template 240 that is for instance a smaller internal part of the distance positioning pattern 230.

Figure 21 shows an example of a template 240. The template matching process makes it possible to obtain the position of the center of the distance positioning patterns 230 and then track the smartphone 24 on the camera stream.

As the position of the distance positioning patterns 230 on the smartphone screen may be fixed independently of the smartphone type, that position will thus be known, which makes it possible to calculate the distance between two adjacent distance positioning patterns 230 at various distances from the mirror, so that the distance between the smartphone 24 and the mirror is known and it is known when the smartphone 24 is an appropriate distance from the mirror, e.g. 30 cm, for performing the subsequent steps of the method.

A message, such a mirrored character or character string, may be displayed on the smartphone screen in case the smartphone is too close to the mirror, in order to invite the user to move the smartphone backward.

Similarly, a message such as a mirrored character or character string may be displayed on the smartphone screen in case the smartphone is too far from the mirror, in order to invite the user to move the smartphone forward.

Step 3: adaptation of the brightness of the smartphone screen

Adapting the brightness of the smartphone screen may be useful, because the light environment may vary. To that end, the following steps may be implemented.

During a loop, the smartphone screen brightness is first increased by small steps until it reaches a maximum predetermined value and is then decreased similarly by small steps until it reaches a minimum predetermined value.

As soon as all the distance positioning patterns 230 are detected in one picture during the loop, the loop stops and the smartphone screen brightness is adjusted by small steps until the mean color of the matched template 240 is in the range [120; 140] in the grayscale color space [0; 255].

Figure 22 shows the brightness of the template 240 of Figure 21 with, from left to right, three views showing a brightness that is respectively correct, too high and too low.

Thus, the user will see the smartphone screen alternate between bright and dark during the loop and, as soon as all the distance positioning patterns 230 are detected, a predetermined sign such as a "stop" sign will be displayed and/or voice guidance will invite the user to stop moving the smartphone.

At such time, the smartphone 24 is tilted optimally and positioned at the right distance and optimal brightness has been reached.

Step 4: frame detection

For detecting the eyeglasses frame 140 in the camera stream, an object detection and recognition model based on a neural network may be used in order to detect the lens 30 in the camera stream. By way of non-limiting example, a neural network of the Yolo v3-Tiny type may be used. The model is trained using a predetermined number of pictures of a frame against a mirror and pictures of a frame on a person's face.

The neural network returns the position and size, called Region Of Interest (ROI), of all the lenses it detects in the camera stream. For example, it may return at least two lenses, which correspond to the left and right lenses in the eyeglasses frame 140.

Figure 23 illustrates corresponding user guidance.

As shown in Figure 23, a second fixed object 260, which may for example have a first predetermined color, is displayed at the center of the smartphone screen. It represents the center of the upper part of the smartphone screen in the camera stream.

The second fixed object 260 may for example be a colored geometric shape, e.g. a red circle.

In addition, a second moving object 262 of a second predetermined color different from the first color and having a shape and size equal to the shape and size of the first fixed object 260, is also displayed on the smartphone screen. It represents the lens 30 of which at least one optical parameter is to be retrieved.

If the second fixed object 260 is a red circle, the second moving object 262 may be for example a green circle.

The user is invited to move the smartphone 24 so that the second moving object 262 matches the second fixed object 260, which means that the frame 140 and the smartphone 24 are correctly positioned.

As a variant, both second objects 260 and 262 could be moving with respect to each other, although this may be less ergonomic for the user.

Step 5: automatic photo capture

When the second moving object 262 matches the second fixed object 260, a predetermined object or message is displayed on the smartphone screen, so that the user knows that the frame 140 and smartphone 24 should not be moved. By way of non-limiting example, as a predetermined object, a white circle on a green background may be displayed.

At that time, pictures are automatically taken by the camera of the smartphone 24 for processing according to the method disclosed in document WO 2021/140204 A1 in order to retrieve the at least one optical parameter of the lens 30.

A variant of the step of obtaining of a rough estimate of the at least one parameter is described below, in an example where the at least one parameter is the lens power.

In that variant, the three following steps, detailed hereafter, are carried out:

Step A: estimation of the distance between a target and the smartphone camera
Step B: estimation of horizontal, vertical and diagonal magnifications

Step C: estimation of the lens power based on the estimation obtained at step A and the estimations obtained at step B

Step A: estimation of the distance between a target and the smartphone camera

- calibration data are provided as an input;
- matching points are determined between a target, e.g. the pattern 20 displayed on the smartphone screen (the object), and the pattern 20 in the mirror (the image). The pattern 20 used for this step may be a QR code displayed in the bottom part of the smartphone screen as in Figure 16;
- the relative positions of the smartphone 24 and the mirror and thus, the estimated distance d between the target and the camera, are determined through an optimization process, using the distance denoted Tz between the smartphone 24 and the mirror, as well as the orientation of the smartphone 24 defined by its rotation by a pitch angle Rx and by a roll angle Ry, referring to the pitch and roll axes X, Y shown in Figure 18.

Step B: estimation of horizontal, vertical and diagonal magnifications

It is noted that, in this variant, the relative positions of the camera, the lens and the pattern 20 are not used in this step, as detailed below.

By using the part of the pattern 20 that is seen by the camera only i.e. outside the lens 30 (for example the QR code of Figure 16) and considering that the vertical direction is defined by the roll axis Y of the smartphone 24 as shown in Figure 18, three magnifications between the above-mentioned object and image are determined for the camera:

- the horizontal magnification for the camera, denoted MCh;
- the vertical magnification for the camera, denoted MCv; and
- the diagonal magnification for the camera, denoted MCd, that is defined in one of the two diagonal directions i.e. at an angle of 45° between the pitch and roll axes X, Y.

Then, by using the part of the pattern 20 that is seen by the camera through the lens 30 (for example the circular target of Figure 15) and considering that the vertical direction is defined by the roll axis Y of the smartphone 24 as shown in Figure 18, three magnifications between the above-mentioned object and image are determined for the assembly consisting of the camera and the lens 30:

- the horizontal magnification for the camera+lens assembly, denoted MLCh;
- the vertical magnification for the camera+lens assembly, denoted MLCv; and
- the diagonal magnification for the camera+lens assembly, denoted MLCd, that is defined in one of the two diagonal directions i.e. at an angle of 45° between the pitch and roll axes X, Y.

Then, the horizontal, vertical and diagonal magnifications for the lens 30, respectively denoted Mh, Mv and Md, are extracted as follows:

$$Mh = MLCh/MCh$$

$$Mv = MLCv/MCv$$

$$Md = MLCd/MCd$$

Step C: estimation of the lens power based on the estimation obtained at step A and the estimations obtained at step B

By using the estimated distance d obtained at step A and the magnifications Mh, Mv and Md obtained at step B, the lens power in the horizontal direction, denoted Power_h, the lens power in the vertical direction, denoted Power_v and the lens power in the diagonal direction, denoted Power_d are determined as follows:

$$Power\_h = (Mh - 1)/(Mh \times d)$$

$$Power\_v = (Mv - 1)/(Mv \times d)$$

$$Power\_d = (Md - 1)/(Md \times d)$$

In more detail, the above formulas are obtained as follows, referring to Figure 24.

Magnifications M are defined as A'B'/AB = OA'/OA.

The power P is defined as (1/OA') - (1/OA).

Thus, OA' = (1/ (P+(1/OA))), which gives OA'/OA = (1/(P.OA + 1)).

As OA = -d, M = 1/(1 - d.P).

As a result, P = (M - 1)/(M.d).

In the context of the above-described method disclosed in document WO 202/140204 A1, it is necessary to guide the user to position the smartphone 24 such that the displayed pattern is at the right position with respect to the lens 30 of which it is desired to retrieve at least one optical parameter such as the lens power. This is the purpose of the method according to the present disclosure for estimating the position of the optical center of the lens 30 mounted on the frame 140. This method is described in detail below.

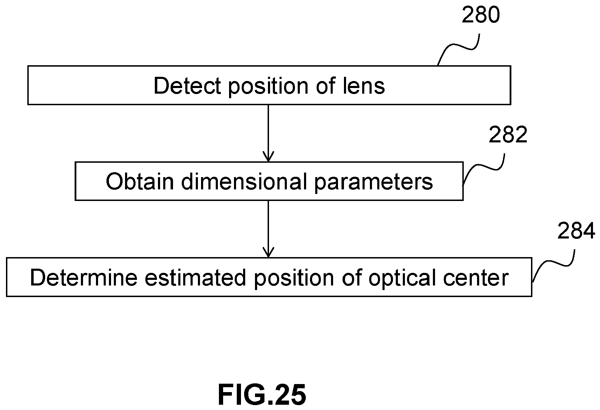

As shown in Figure 25, during a first step 280 of the method according to the present disclosure, the position of the lens 30 is detected in the camera stream.

In a particular embodiment, a neural network is used for such detection. By way of non-limiting example, a finely tuned neural network of the Yolo v3-Tiny type as mentioned above may be used.

During step 280, the position of the frame may also be detected in the camera stream.

In a particular embodiment, the neural network is capable of providing in real time a bounding box that is the smallest rectangle containing the image of the lens 30.

In an embodiment where the position of the frame is detected, the method according to the present disclosure is performed using the referential of the frame, taking the center of the referential in the center of the bounding box, assuming it is the center of the bridge.

Instead of using a neural network, an image processing algorithm may be used for detecting the lens position in the camera stream.

Following step 280, at a step 282, a plurality of dimensional parameters either of the frame, or of the lens, is obtained.

Step 282 may be performed by using a neural network, which may be the same as the one used for detecting the position of the lens 30 at step 280. When obtaining dimensional parameters of the frame 140, the neural network may detect the image of the frame in the camera stream and may provide a bounding box around the frame bridge.

As a variant, step 282 may be performed by using an image processing algorithm.

As another variant, step 282 may be performed by using a database using a reference code displayed on one of the arms of the frame 140.

As still another variant, step 282 may be performed by using a statistical model that provides average values, which may depend on the frame type that may be detected by a neural network.

The plurality of lens dimensional parameters may comprise a dimension corresponding to the lens width A and/or a dimension corresponding to the lens height B.

By way of non-limiting example, the lens width A and the lens height B may be extracted from the bounding box.

The plurality of frame dimensional parameters may comprise at least a dimension corresponding to the frame bridge width D. In addition, the plurality of frame dimensional parameters may also comprise the A size and/or the B size.

By way of non-limiting example, the frame bridge width D may be obtained as a statistical estimate based on a collection of frames.

Last, at a step 284, the estimated position of the optical center is determined based on the detected lens position and either the plurality of frame dimensional parameters, or the plurality of lens dimensional parameters, by estimating a relationship between the obtained dimensional parameters. By way of non-limiting example, in the coordinate system of the lens, a first order estimation of the optical center position may be A/2.

In a particular embodiment, for more accuracy of the estimation of the optical center position, the method according to the present disclosure comprises obtaining a plurality of dimensional parameters of the frame 140 and further comprises obtaining an estimated pupillary distance PD. In that embodiment, step 284 is based on the detected lens position, the plurality of frame dimensional parameters and the estimated pupillary distance PD. By way of non-limiting example, the estimated position of the optical center may be given by the position of the eye inside the lens (corresponding to the pupillary distance PD) in the referential of the bounding box. Thus, for the full frame, the estimation of the optical center position may be Ax2+D-PD, centered on the bridge and for one lens, it may be A+D/2-PD/2.

The estimated pupillary distance PD may be an exact value, measured on a wearer of the lens 30 either manually or by using a mobile application (API). As a variant, it may be an approximate value, obtained from a statistical model, in which case the value may depend on ethnicity.

A system according to the disclosure, for implementing a method comprising the above-mentioned steps 280, 282 and 284 for estimating the position of the optical center of an ophthalmic lens mounted on a frame, comprises at least one processor and a mobile device equipped with the above-mentioned image capture device.

In a particular embodiment, the mobile device is a smartphone and the image capture device is a smartphone camera, as described above with reference to Figure 2.

In a particular embodiment, the method according to the disclosure is computer-implemented. Namely, a computer program product comprises one or more sequences of instructions that are accessible to a processor and that, when executed by the processor, cause the processor to carry out steps 280, 282 and 284 of the method as described above for estimating the position of the optical center of an ophthalmic lens mounted on a frame.

The sequence(s) of instructions may be stored in one or several non-transitory computer-readable storage medium/media, including a predetermined location in a cloud.

Although representative systems and methods have been described in detail herein, those skilled in the art will recognize that various substitutions and modifications may be made without departing from the scope of what is described and defined by the appended claims.

**Claims**

1. A method for estimating a position of an optical center of an ophthalmic lens mounted on a frame, an image of said frame being obtained by an image capture device, wherein said method comprises:

   detecting the position of said lens in a stream of said image capture device;
   obtaining a plurality of dimensional parameters, either of said frame, or of said lens;
   determining said estimated position of said optical center based on said detected lens position and either said plurality of frame dimensional parameters, or said plurality of lens dimensional parameters.

2. A method according to claim 1, wherein said method comprises obtaining a plurality of dimensional parameters of said frame and further comprises obtaining an estimated pupillary distance, said determining said estimated position of said optical center being based on said detected lens position, said plurality of frame dimensional parameters and said estimated pupillary distance.

3. A method according to claim 2, wherein said estimated pupillary distance is either an exact value, measured on a wearer of said ophthalmic lens, or an approximate value, obtained from a statistical model.

4. A method according to claim 1, 2 or 3, wherein said detecting said lens position comprises using a neural network.

5. A method according to claim 1, 2 or 3, wherein said detecting said lens position comprises using an image processing algorithm.

6. A method according to any of the preceding claims, wherein said plurality of lens dimensional parameters comprises at least one of a dimension corresponding to a lens width and a dimension corresponding to a lens height.

7. A method according to any of the preceding claims, wherein said plurality of frame dimensional parameters comprises at least a dimension corresponding to a frame bridge width.

8. A method according to claim 6, wherein said method further comprises extracting said lens width and said lens height from a bounding box that is the smallest rectangle containing said lens.

9. A method according to claim 7, wherein said method further comprises obtaining said frame bridge width as a statistical estimate based on a collection of frames.

10. A method according to any of the preceding claims, wherein said obtaining said plurality of dimensional parameters, either of said frame, or of said lens, comprises using a neural network, or an image processing algorithm, or a database using a reference code on an arm of said frame, or a statistical model.

11. A method according to claims 4 and 8, wherein said neural network provides said bounding box in real time.

12. A system for implementing a method for estimating a position of an optical center of an ophthalmic lens mounted on a frame, an image of said frame being obtained by an image capture device, wherein said method comprises:

   detecting the position of said lens in a stream of said image capture device;
   obtaining a plurality of dimensional parameters, either of said frame, or of said lens;
   determining said estimated position of said optical center based on said detected lens position and either said plurality of frame dimensional parameters, or said plurality of lens dimensional parameters,
   wherein said system comprises:

      at least one processor;
      a mobile device equipped with said image capture device.

13. A system according to claim 12, wherein said mobile device is a smartphone and said image capture device is a smartphone camera.

14. A computer program product comprising one or more sequences of instructions that are accessible to a processor and that, when executed by said processor, cause said processor to implement a method for estimating a position of an optical center of an ophthalmic lens mounted on a frame, an image of said frame being obtained by an image capture device, wherein said method comprises:

   detecting the position of said lens in a stream of said image capture device;
   obtaining a plurality of dimensional parameters, either of said frame, or of said lens;
   determining said estimated position of said optical center based on said detected lens position and either said plurality of frame dimensional parameters, or said plurality of lens dimensional parameters.

15. A non-transitory information storage medium, storing one or more sequences of instructions that are accessible to a processor and that, when executed by said processor, cause said processor to implement a method for estimating a position of an optical center of an ophthalmic lens mounted on a frame, an image of said frame being obtained by an image capture device, wherein said method comprises:

   detecting the position of said lens in a stream of said image capture device;
   obtaining a plurality of dimensional parameters, either of said frame, or of said lens;
   determining said estimated position of said optical center based on said detected lens position and either said plurality of frame dimensional parameters, or said plurality of lens dimensional parameters.

10

Obtain image of first and second patterns

12

Obtain first set of data

14

Obtain second set of data

16

Retrieve optical parameter

**FIG.1**

**FIG.2**

28

Rmirror

y

z

x

**FIG.3**

24

26

28

C

I

Q

22

Q'

**FIG.4**

**FIG.5**

**FIG.6**

FIG.7

FIG.8

FIG.9

FIG.10

FIG.11

FIG.12

```
                                                        8
┌─────────────────────────────────────┐  ⌇
│      Obtain image of the frame        │
└─────────────────────────────────────┘
                   │
                   ▼                          10
┌─────────────────────────────────────┐  ⌇
│    Obtain image of first and second   │
│               patterns                │
└─────────────────────────────────────┘
                   │
                   ▼                       12
    ┌─────────────────────────────┐  ⌇
    │      Obtain first set of data │
    └─────────────────────────────┘
                   │
                   ▼                       14
    ┌─────────────────────────────┐  ⌇
    │    Obtain second set of data  │
    └─────────────────────────────┘
                   │
                   ▼                          16
┌─────────────────────────────────────┐  ⌇
│   Retrieve optical parameter in the   │
│       camera coordinate system        │
└─────────────────────────────────────┘
                   │
                   ▼                          18
┌─────────────────────────────────────┐  ⌇
│  Detect position of frame in the image│
│      of first and second patterns     │
└─────────────────────────────────────┘
                   │
                   ▼                          19
┌─────────────────────────────────────┐  ⌇
│   Retrieve optical parameter in the   │
│        frame coordinate system        │
└─────────────────────────────────────┘
```

## FIG.13

30

**FIG.14**

**FIG.15**

**FIG.16**

180

20

140

30

30

24

**FIG.17**

220

222

**FIG.19**

FIG.18

FIG.23

FIG.20

FIG.21

FIG.22

FIG.24

280

Detect position of lens

282

Obtain dimensional parameters

284

Determine estimated position of optical center

**FIG.25**

Europäisches
Patentamt

European
Patent Office

Office européen
des brevets

**EUROPEAN SEARCH REPORT**

Application Number

EP 21 30 6739

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | WO 2021/140204 A1 (ESSILOR INT [FR]) 15 July 2021 (2021-07-15) | 12,13 | INV. G02C13/00 |
| A | * the whole document * | 1-11,14, 15 | G01M11/02 |
| X | US 10 775 266 B2 (SHAMIR OPTICAL IND LTD [IL]) 15 September 2020 (2020-09-15) * column 1, line 5 - column 1, line 8; figures 9,10A * * column 1, line 40 - column 1, line 43 * * column 5, line 62 - column 13, line 35 * * column 21, line 40 - column 22, line 67 * * column 38, line 41 - column 41, line 30 * | 1-15 | |
| X | CN 112 880 984 A (CHONGQING YEASN TECH CO LTD) 1 June 2021 (2021-06-01) | 12,13 | |
| A | * claim 1; figures 1-3 * | 1-11,14, 15 | |
| | | | TECHNICAL FIELDS SEARCHED (IPC) |
| X | US 2021/382329 A1 (OHLENDORF ARNE [DE] ET AL) 9 December 2021 (2021-12-09) | 12,13 | G01M |
| A | * paragraph [0002]; figure 3 * * paragraph [0030] * * paragraph [0053] - paragraph [0063] * | 1-11,14, 15 | G02C B24B |

The present search report has been drawn up for all claims

| Place of search | Date of completion of the search | Examiner |
|---|---|---|
| The Hague | 13 May 2022 | Foster, Keir |

EPO FORM 1503 03.82 (P04C01)

## ANNEX TO THE EUROPEAN SEARCH REPORT
## ON EUROPEAN PATENT APPLICATION NO.

EP 21 30 6739

This annex lists the patent family members relating to the patent documents cited in the above-mentioned European search report.
The members are as contained in the European Patent Office EDP file on
The European Patent Office is in no way liable for these particulars which are merely given for the purpose of information.

13-05-2022

| Patent document cited in search report | | Publication date | Patent family member(s) | | Publication date |
|---|---|---|---|---|---|
| WO 2021140204 | A1 | 15-07-2021 | NONE | | |
| US 10775266 | B2 | 15-09-2020 | EP | 3414515 A1 | 19-12-2018 |
| | | | US | 2019049336 A1 | 14-02-2019 |
| | | | WO | 2017138004 A1 | 17-08-2017 |
| CN 112880984 | A | 01-06-2021 | NONE | | |
| US 2021382329 | A1 | 09-12-2021 | CN | 113678055 A | 19-11-2021 |
| | | | EP | 3730998 A1 | 28-10-2020 |
| | | | EP | 3956721 A1 | 23-02-2022 |
| | | | US | 2021382329 A1 | 09-12-2021 |
| | | | WO | 2020216788 A1 | 29-10-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021140204 A1

- WO 202140204 A1